# EUROPÄISCHE PATENTSCHRIFT

(11) **EP 0 696 261 B1**
(45) Veröffentlichungstag und Bekanntmachung des Hinweises auf die Patenterteilung: **30.07.1997**
(21) Anmeldenummer: 94915530.3
(22) Anmeldetag: 23.04.1994
(51) Int. Cl.: C02F 9/00, C02F 3/12, C02F 1/72

(54) **VERFAHREN ZUR BEHANDLUNG VON ORGANISCHE UND ANORGANISCHE VERBINDUNGEN ENTHALTENDEN ABWÄSSERN AUS DER EPICHLORHYDRIN-HERSTELLUNG**
METHOD OF TREATING WASTE WATER CONTAINING ORGANIC AND INORGANIC COMPOUNDS ARISING FROM THE MANUFACTURE OF EPICHLOROHYDRIN
PROCEDE POUR LE TRAITEMENT D'EAUX RESIDUAIRES CONTENANT DES COMPOSES ORGANIQUES ET INORGANIQUES, PROVENANT DE LA FABRICATION D'EPHICHLORHYDRINE

(30) Priorität: 29.04.1993 DE 4314108
(43) Veröffentlichungstag der Anmeldung: 14.02.1996
(73) Patentinhaber: Solvay Deutschland GmbH, D-30173 Hannover (DE)
(72) Erfinder: DILLA, Wolfgang, D-47495 Rheinberg (DE); DILLENBURG, Helmut, D-47495 Rheinberg (DE); KREBBER, Hans-Georg, D-47495 Rheinberg (DE); PLÖNISSEN, Erich, D-47495 Rheinberg (DE)
(74) Vertreter: Lauer, Dieter, Dr.
(86) Internationale Anmeldenummer: EP9401269
(87) Internationale Veröffentlichungsnummer: WO9425405

(56) Entgegenhaltungen:
- EP-A- 0 349 708
- EP-A- 0 362 934
- EP-A- 0 461 785
- EP-A- 0 586 998
- WO-A-92/05118
- FR-A- 2 232 516
- FR-A- 2 332 959
- GB-A- 1 277 632

## Beschreibung

Die Erfindung betrifft ein Verfahren zur Behandlung von organische Stoffe enthaltenden Abwässern, insbesondere aus der Epichlorhydrin-Herstellung, wobei das Epichlorhydrin durch Umsetzung von Dichlorpropanol mit mindestens einer alkalisch wirkenden Verbindung, vorzugsweise einer calciumhydroxidhaltigen wäßrigen Lösung oder Suspension erhalten und durch Destillation aus dem Reaktionsgemisch abgetrennt wird und als Sumpfprodukt ein Abwasser zurückbleibt bzw. aus dem Synthesereaktor abgezogen werden kann, das neben geringsten Mengen des Reaktionsproduktes und des Ausgangsproduktes Dichlorpropanol weitere organische, chlororganische und anorganische Verbindungen als Nebenprodukte der Synthese enthält. Dieses als Abwasser anfallende Sumpfprodukt weist (bei Einsatz von Calciumhydroxid als alkalisch wirkendes Mittel in der Epichlorhydrinsynthese) typischerweise folgende Verbindungen auf: chlorierte, aliphatische, cyclische oder alicyclische gesättigte und/oder ungesättigte Kohlenwasserstoffe, gesättigte und/oder ungesättigte aliphatische und/oder alicyclische Chlor-Ether, -Alkohole, -Ketone, -Aldehyde und/oder -Carbonsäuren, sowie neben weiteren zum CSB (chemischer Sauerstoffbedarf) des Abwassers beitragenden Verbindungen, insbesondere Glycerin und Glycerinderivate, sowie Carbonsäuren, desweiteren Calciumchlorid, Calciumcarbonat und gegebenenfalls im Überschuß eingesetztes Calciumhydroxid. Die in dem Sumpfprodukt enthaltenen chlororganischen Verbindungen tragen zum Summenparameter AOX (adsorbierbare organische Halogenverbindungen) des Abwassers bei. Der AOX wird als der Teil organischer Halogenverbindungen (X = F, Cl, Br, J) bestimmt, die sich an Aktivkohle adsorbieren lassen, wobei die gesamte adsorbierte Menge auf X = Cl umgerechnet wird.

Derartig halogenierte organische Verbindungen enthaltende Abwässer stellen ein besonderes Problem in der Abwasserreinigung dar, da die Entfernung dieser Stoffe wegen der hohen Stabilität der kovalenten Kohlenstoff-Halogen-Bindungen, insbesondere bei sp²-gebundenen Halogenen, technisch sehr aufwendig und damit häufig unwirtschaftlich ist. Bekannte Maßnahmen zur Reduzierung halogenierter organischer Stoffe in Abwässern, sind chemisch-physikalische sowie biotechnologische Verfahren.

Verfahren zur chemisch-physikalischen Entfernung von halogenorganischen Verbindungen aus Abwässern werden zur Haupt- oder Vorreinigung (mit nachfolgender biochemischen Behandlung) des Abwassers eingesetzt. Methoden, die hier zur Verfügung stehen, sind beispielsweise die Aktivkohlereinigung sowie spezielle Extraktionsverfahren. Nachteil dieser Verfahren ist, daß sie ein mit halogenierten organischen Verbindungen belastetes Sekundärprodukt (beladene Aktivkohle bzw. Extraktionsmittel) erzeugen. Aktivkohle, die mit organischen Inhaltsstoffen aus Abwässern der Epichlorhydrinproduktion beladen ist, läßt sich durch das bekannte Verfahren der Behandlung mit Wasserdampf oder heißen Inertgasen, wie z.B. Stickstoff, nicht ausreichend regenerieren.

Der Abbau von halogenierten organischen Verbindungen in der biochemischen Reinigungsstufe einer Kläranlage wirft ebenfalls verschiedene Probleme auf. Einerseits sind viele dieser Verbindungen nur schwer oder gar nicht einer biologischen Zersetzung durch Mikroorganismen zugänglich, andererseits dürfen die Einsatzkonzentrationen an AOX-erzeugenden Stoffen im Abwasser nicht hoch sein und sollten weitgehend konstante Werte aufweisen.

Zudem ist das Volumen des Belebtschlammes in solchen Anlagen groß und die Anreicherung der organischen Halogenverbindungen im Schlamm stellt ein weiteres Problem dar, so daß vielfach zur Vernichtung halogenorganischer Verbindungen in Abwässern chemisch-thermische Verfahren Verwendung finden. Hierzu gehören die sogenannten naßoxidativen Verfahren, bei denen in einer oxidierenden Atmosphäre bei hohen Temperaturen und erheblichen Drücken eine Zersetzung halogenierter organischer Verbindungen durchgeführt wird. Diese Methode ist jedoch kostenintensiv.

Die extremen physikalischen Bedingungen chemisch-thermischer Verfahren können bekanntlich durch den Einsatz katalytisch wirkender Verbindungen gemildert werden, wobei diese Stoffe entweder durch Zugabe entsprechender Reagenzien in das zu dehalogenierende System gelangen können oder sich während der Zersetzungsreaktion als Zwischenprodukte bilden.

Als Stoffe, die gegenüber organisch gebundenen Halogenen eine hohe Reaktivität aufweisen, werden beispielsweise Metalle, Metallhydride oder Metallalkoholate allein oder in Verbindung mit einer starken Base eingesetzt. Nachteil der bekannten chemisch-thermischen Verfahren sind neben ihren verhältnismäßig hohen Kosten die vielfach langen Reaktionszeiten (oft mehr als 10 Stunden) und die häufig nur mäßigen Abbauraten. Desweiteren sind Verfahren zur Behandlung von Abwässern aus der Zellstoffbleiche bekannt, bei denen die im Abwasser enthaltenden Chlorligninverbindungen unter Einhaltung bestimmter Temperaturen, pH-Werte und Verweilzeiten partiell dehalogeniert und/oder dehydrohalogeniert werden (DE-OS 3 620 980, WO 92/05118). Die hier vorgeschlagenen Verfahren können aufgrund der völlig anderen Abwasserzusammensetzungen mit den damit nicht übertragbaren Parametern hinsichtlich pH-Wert, Temperatur, Druck und Verweilzeit auf ein Behandlungsverfahren für Abwasser aus der Epichlorhydrinsynthese nicht übertragen werden.

Desweiteren ist aus der EP-A-0 362 934 ein Verfahren zur Behandlung von Abwässern der Epoxidharzherstellung bekannt, indem die Abwässer zunächst thermisch-alkalisch behandelt werden und nach Abtrennung des gebildeten Natriumchlorids einer biologischen Weiterbehandlung zugeführt werden.

In der FR-A 2 332 959 wird ein Verfahren zur Behandlung von Abwässern beschrieben, indem die Abwässer thermisch-alkalisch, vorzugsweise in Gegenwart von Ammoniak oder Aminen behandelt werden, wobei eine katalytische Vorbehandlung oder eine biologische Nachbehandlung möglich sein kann.

Aber auch diese Verfahren können nicht ohne weiteres auf Abwässer aus der Epichlorhydrinsynthese übertragen werden.

Aufgabe der Erfindung war es daher, ein Verfahren zur Behandlung von mit organischen und anorganischen Stoffen belasteten Abwässern, vorsugsweise aus der Epichlorhydrinsynthese, bereitzustellen, das sich durch eine einfache Verfahrensführung, geringen energetischen und apparativen Aufwand auszeichnet, und mit dem eine Reduzierung des AOX-Gehaltes sowie des CBS-Wertes möglich ist.

Gegenstand der voliegenden Erfindung ist daher ein Verfahren, das dadurch gekennzeichnet ist, daß das aus dem Reaktionsbehälter austretende oder ausgetragene Abwasser, das adsorbierbare organische Halogenverbindungen (AOX) in einer Menge von mehr als 10 mg pro Liter, vorzugsweise mehr als 20 mg pro Liter und eine Gesamtgehalt an gelösten organischen Stoffen von mehr als 0,10 g pro Liter enthält, eine thermisch-alkalische, eine biologische und eine oxidative Behandlung durchläuft.

Das Abwasser, das einen pH-Wert von 10 bis 14, vorzugsweise 11 bis 14 (gemessen bei Raumtemperatur) aufweist oder auf einen solchen pH-Wert eingestellt wird, wird in mindestens einen Reaktor eingebracht und/oder durchläuft diesen, wobei eine Temperatur von mehr als 75 °C, vorzugsweise 85 °C bis 185 °C, ein Druck von mindestens 1 bar (absolut), vorzugsweise 1 bis 10,5 bar (absolut) und einer Verweilzeit von mindestens 0,5 Stunden, vorzugsweise 1 bis 8 Stunden in dem Reaktor eingestellt oder eingehalten werden. Durch Einhaltung bzw. Einstellung der jeweiligen Sätze von Parametern ist eine gezielte AOX-Abbaurate möglich. Die AOX-Abbaurate ist u.a. abhängig vom Ausgangs-AOX und von der Struktur der AOX-erzeugenden Verbindungen. Folgende Parametersätze sollen vorzugsweise Ausfüh-rungsformen der chemisch-thermischen Behandlungstufe aufzeigen (siehe Tabelle 1).

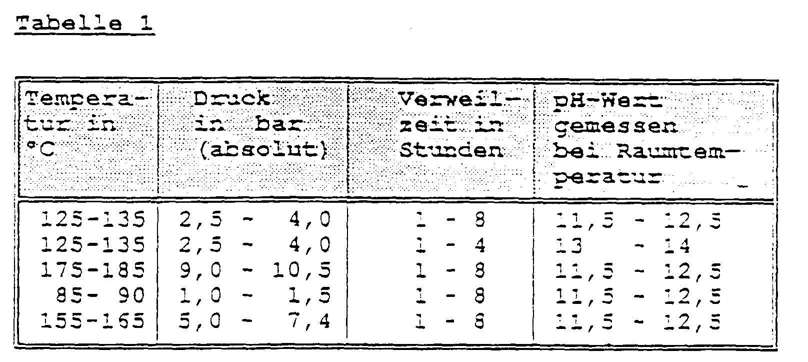

Hierbei wurde gefunden, daß auch bei relativ niedrigen Temperaturen und Drücken sowie einer pH-Werteinstellung vorzugsweise im Bereich von 11,5 bis 12,5 (gemessen bei Raumtemperatur) eine deutliche Verminderung des AOX-Gehaltes im Abwasser bei Verweilzeiten unter 10 Stunden möglich ist, was einen Vorteil des erfindungsgemäßen Verfahrens darstellt. Es hat sich weiterhin als vorteilhaft herausgestellt, bei der Epichlorhydrinsynthese als calciumhydroxidhaltige wäßrige Lösung oder Suspension Kalkmilch mit einem Überschuß an Calciumhydroxid (bezogen auf die zur vollständigen Umsetzung theoretisch berechnete stöchiometrische Menge an Dichlorpropanol) einzusetzen, wobei die überschüssige Menge so groß gewählt wird, daß das zu behandelnde Abwasser bereits durch den das Abwasser erzeugenden Prozeß auf pH-Werte von 11 bis 12,5 (gemessen bei Raumtemperatur) eingestellt wird und somit schon bei Austritt aus dem Synthesereaktor den zur thermisch-alkalischen Behandlung notwendigen pH-Wert aufweist. Um das Abwasser gegebenenfalls auf die erfindungsgemäßen pH-Wert (gemessen bei Raumtemperatur) einzustellen, kann auch eine entsprechende Menge Alkali- und/oder Erdalkalihydroxid, vorzugsweise eine wäßrige Calciumhydroxid und/oder Natriumhydroxid-Lösung zugesetzt werden. Die pH-Wert-Einstellung kann auch mit einer entsprechenden Menge Alkalicarbonat und/oder Alkalihydrogencarbonat, vorzugsweise einer wäßrigen Natriumcarbonat und/oder Natriumhydrogencarbonat-Lösung vorgenommen werden.

Da das aus dem Synthesereaktor austretende Abwasser insbesondere bei überschüssig eingesetzter Kalkmilch als alkalisch wirkendes Mittel bei der Epichlorhydrinherstellung suspendierte Feststoffe enthält, was zu Störungen im weiteren Verfahrensablauf führen kann, ist es vorteilhaft, das Abwasser gegebenenfalls vor, während und/oder nach den einzelnen Behandlungsstufen von den suspendierten Feststoffen zumindest teilweise zu befreien, indem durch entsprechende übliche Maßnahmen diese Feststoffe abgetrennt bzw. abgeschieden werden. Dies erfolgt vorzugsweise durch chemische Reaktionen, indem z.B. suspendiertes Calciumhydroxid durch Zugabe von Salzsäure gelöst wird und/oder durch mechanische Trennverfahren, wie beispielsweise Filtration oder Sedimentation.

Wegen der vorgenannten vorhandenen suspendierten Feststoffe erfolgt die Einspeisung des zu behandelnden Abwasserstroms am Kopf des Reaktors bzw. der Reaktoren und das behandelte Abwasser wird am Boden des Reaktors ausgetragen. Eine Einspeisung von unten mit aufwärtsgerichteter Strömung könnte zu Verstopfungsproblemen durch die suspendierten Feststoffe führen. Zur kontinuierlichen Durchführung der thermisch-alkalischen Behandlungsstufe kann aber auch ein Strömungsrohr oder Rohrreaktor eingesetzt werden, wobei in dem Strömungsrohr oder Rohrreaktor eine Strömungsgeschwindigkeit von mehr als 4 m pro Sekunde eingestellt wird. Vorzugsweise beträgt die Strömungsgeschwindigkeit 8,5 m pro Sekunde. Die in dem Abwasser enthaltenden chlororganischen Verbindungen werden durch diese Behandlung teilweise dechloriert und/oder dehydrochloriert.

Durch die thermisch-alkalische Behandlungsstufe a) werden die Bedingungen für den biologischen Abbau bzw. biochemischen Abbau der verbleibenden organischen Verbindungen und die Eigenschaften des biologischen Schlamms verbessert. Durch den mikrobiellen Abbau wird gleichzeitig auch der CSB-Wert (chemischer Sauerstoffbedarf) des Abwassers gesenkt, was aus einer Umsetzung der in dem Abwasser gelösten organischen Verbindungen durch die Stoffwechseltätigkeit der Mikroorganismen resultiert.

Die biologische Behandlung kann im aeroben oder anaeroben Betrieb durchgeführt werden.

Das aus dem Reaktor ausgetragene Abwasser mit einem abgesenkten AOX-Wert wird nunmehr der biologischen Behandlung b) zugeführt. Dazu ist es notwendig, das der pH-Wert abgesenkt wird, so daß das Abwasser mit einem pH-Wert von 7 bis 11, vorzugsweise 7,5 bis 10,5, in den biologischen Reaktor eingeleitet wird. Zur pH-Wert-Einstellung kann eine Säure, vorzugsweise Salzsäure verwendet werden. Es hat sich als vorteilhaft erwiesen, das Abwasser vor Einleiten in die biologische Stufe von den Feststoffen durch Filtration oder anderen bekannten mechanischen Verfahren zu befreien. Die biologische Behandlung erfolgt in Gegenwart von Mikroorganismen, vorzugsweise unter aeroben Bedingungen im Belebtschlammbecken. Die biologische Behandlung kann ein- oder mehrstufig durchgeführt werden.

Zur biologischen Behandlung des Abwassers wird ein Gemisch aus grampositiven Bakterien mit einem Anteil von 20 bis 98 % an der gesamten Biozönose und gramnegativen Bakterien mit einem Anteil von 2 bis 80 % an der gesamten Biozönose eingesetzt.

In einer anderen Ausführungsform des erfindungsgemäßen Verfahrens werden zur biologischen Behandlung des Abwassers nur grampositive Bakterien eingesetzt.

Als grampositve Bakterien können z.B. Bakterien des Typs
Clavibacter
Cellulomonas
Aureobacterium
Microbacterium und/oder
Curtobacterium
insbesondere Bakterien des Typs
Clavibacter insidiosus/sepedonicum
Cellulomonas uda und/oder
Aureobacterium barkeri
eingesetzt werden.

Als gramnegative Bakterien werden vorzugsweise Bakterien des Typs Alcaligenes insbesondere des Typs Alcaligenes xylosoxidans ssp. denitrificans eingesetzt.

Die biologische Behandlungsstufe wird mit einer mittleren Verweilzeit von 4 bis 25 Stunden, vorzugsweise 7 bis 18 Stunden und einer Temperatur kleiner gleich 35 °C betrieben.

Der Gehalt an Biomasse im Belebtschlammbecken kann 1 bis 10 g/l vorzugsweise 2 bis 6 g/l betragen.

Das die erste Behandlungsstufe verlassende Abwasser kann gegebenenfalls vor Eintrag in die biologische Behandlungsstufe mit anderen Abwässern ähnlicher Produktionsverfahren und/oder mit ähnlichen Inhaltsstoffen vermischt werden. So können Abwässer aus der Polyolproduktion, der Vinylchloridproduktion und/ oder der Polyvinylchloridproduktion mit dem aus der ersten Behandlungsstufe vermischt und der biologischen Behandlungsstufe zugeführt werden, wobei ein pH-Wert von 9 bis 11 eingehalten bzw. eingestellt werden muß.

Wird erfindungsgemäß dem die thermisch-alkalische Behandlungsstufe verlassenden Abwasser, Abwasser ähnlicher Produktionsverfahren und/oder Abwasser mit ähnlichen Inhaltsstoffen zugemischt, wird in der Verfahrensstufe b) ein Bakteriengemisch aus grampositiven Bakterien mit einem Anteil von 5 bis 90 % an der gesamten Biozönose und gramnegativen Bakterien mit einem Anteil von 10 bis 95 % an der gesamten Biozönose eingesetzt. Als grampositive Bakterien werden in dieser Ausführungsform der Erfindung vorzugsweise Bakterien des Typs Cellulomonas insbesondere Bakterien des Typs
Cellulomonas uda und als gramnegative Bakterien vorzugsweise Bakterien des Typs
Pseudomonas
Alcaligenes
insbesondere Bakterien des Typs
Pseudomonas putida
Pseudomonas gladioli/cepacia
Alcaligenes xylosoxidans
eingesetzt.

Nach einer weiteren Ausführungsform kann nach der biologischen Behandlungsstufe b) in Abhängigkeit vom erzielten Reinheitsgrad eine thermisch-alkalische Behandlung gemäß a) wiederholt werden, an die sich dann wiederum in Abhängigkeit vom erzielten Reinheitsgrad eine chemisch-oxidative Behandlung anschließt.

In einer weiteren Ausführungsform ist es ebenfalls möglich, daß das zu behandelnde Abwasser vor einer thermisch-alkalischen Behandlung einer biologischen Behandlung unterworfen wird und danach gegebenenfalls eine Ozonbehandlung erfolgt.

Durch die biologische Behandlung mit den benannten spezies wird deutliche Senkung des CSB-Wertes um 80 bis 95 % erzielt. Um eine weitere Absenkung der CSB-Werte bzw. der AOX-Werte zu erreichen, wird das die biologische Behandlung verlassende Abwasser einer oxidativen Behandlungsstufe vorzugsweise einer Ozonbehandlung zugeführt.

In einer bevorzugten Ausführungsform der Erfindung wird das zunächst thermisch-alkalisch und danach biologisch behandelte Abwasser mit einem ozonhaltigen Gas oder Ozon versetzt, wobei in dem Abwasser ein pH-Wert größer gleich 10, vorzugsweise größer gleich 11, (gemessen bei Raumtemperatur) eingehalten oder eingestellt, und der Ozoneintrag in einer Menge von 1 bis 4 g Ozon pro Gramm CSB, vorzugsweise 1,5 bis 2,5 Ozon pro Gramm CSB vorgenommen wird und eine Verweilzeit von 5 bis 60 Minuten bei einer Temperatur von kleiner gleich 35 °C eingehalten wird.

Die gegebenenfalls notwendige Einstellung des pH-Wertes kann mit üblichen alkalisch wirkenden Mitteln erfolgen. Insbesondere können die bereits für das erfindungsgemäße thermischalkalische Behandlungsverfahren bestimmten alkalisch wirkenden Substanzen eingesetzt werden. Bevorzugt kommen Natriumhydroxid oder Calciumhydroxid und/oder wäßrige Lösungen oder Suspensionen dieser Verbindungen zum Einsatz. Die Ozonisierung des Abwassers wird vorzugsweise bei Raumtemperatur durchgeführt, insbesondere bei einer Temperatur kleiner gleich 35 °C. Die Ozonbehandlung kann aber auch bei erhöhter Temperatur vorgenommen werden. Zur Ozonisierung werden handelsübliche Ozonisierungsvorrichtungen eingesetzt, die mindestens einen Ozongenerator, einen Behandlungsreaktor aus einem inerten Material mit geeigneten Vorrichtungen zur Durchmischung des Abwassers und einen Injektor enthalten, um das Ozon in das Abwasser einzutragen. Die Ozonbehandlung kann ein- oder mehrstufig durchgeführt werden. Zur weiteren Erhöhung der Abbauleistung kann außerdem während der Ozonisierung noch mit UV-Licht bestrahlt werden. Anstelle der Ozonbehandlung kann die oxidative Behandlung auch unter Verwendung eines Gemisches von H₂O₂ und Ozon erfolgen.

Nach einer weiteren Ausführungsform der Erfindung kann das zunächst thermisch-alkalisch und danach biologisch behandelte Abwasser bei einem vorhandenen oder eingestellten pH-Wert von 6 bis 8, vorzugsweise 6,5 bis 7,5, (gemessen bei Raumtemperatur) mit einem Gemisch aus H₂O₂ und Ozon, wobei das Massenverhältnis von H₂O₂ zu Ozon 0,3 bis 0,7 g H₂O₂ pro Gramm Ozon, vorzugsweise 0,5 g H₂O₂ pro Gramm Ozon beträgt, bei einer mittleren Verweilzeit von 5 bis 60 Minuten und einer Temperatur kleiner gleich 35 °C behandelt werden und das Gemisch 1 bis 4 g Ozon pro g CSB vorzugsweise mehr als 1,5 g Ozon pro g CSB, aber weniger als 2,5 g Ozon pro g CSB enthält.

Durch die erfindungsgemäße mehrstufige Kombination von thermisch-alkalischer Behandlung mit einer biologischen und einer oxidativen Behandlung wird der Gehalt an AOX-erzeugenden Stoffen und der CSB-erzeugenden Komponenten deutlich gesenkt.

Erfindungsgemäß können trotz der im Vergleich mit bekannten Verfahren milden Bedingungen, wie den relativ niedrigen Temperaturen und Drücken, sowie kurzen Verweilzeiten, die chlororganischen Verbindungen weitgehend bereits in der ersten Behandlungsstufe, also thermisch-alkalisch abgebaut werden, so daß der AOX eines Abwassers aus der Epichlorhydrinsynthese, der üblicherweise einen Wert zwischen 25 und 45 mg pro Liter aufweist, auf unter 4 mg pro Liter gesenkt werden kann. Durch die anschließende Weiterbehandlung ist der Abbau der CSB-erzeugenden Stoffe um größer gleich 90 % möglich,

Die Durchführung der Stufe a) des erfindungsgemäßen Verfahrens kann im kontinuierlichen oder diskontinuierlichen Betrieb erfolgen. Weiterhin kann es vorteilhaft sein, das Abwasser vor der Weiterbehandlung in den einzelnen Stufen gegebenenfalls zu kühlen.

Um die Energiebilanz des erfindungsgemäßen Verfahrens zu verbessern, ist es vorteilhaft, die in dem erhitzten behandelten Abwasserstrom gespeicherte Wärmeenergie zumindest teilweise auf einen noch zu behandelnden kühleren Abwasserstrom zu übertragen, wobei gleichzeitig der heiße behandelte Abwasserstrom gekühlt wird. Hierzu wird ein Wärmeaustauscher eingesetzt. Vorzugsweise erfolgt der Wärmeaustausch durch eine direkte Übertragung der Wärmeenergie durch Entspannung und Kondensation, indem das heiße unter Druck stehende Abwasser entspannt wird, wobei insbesondere Wasserdampf entsteht, der in einen noch zu behandelnden kühleren Abwasserstrom eingetragen wird und an diesen seine Wärmeenergie durch Kondensation abgibt. Während und/oder nach der Aufheizphase werden im zu behandelnden Abwasser Gase und/oder Dämpfe frei, insbesondere mit den leichterflüchtigen organischen Verbindungen beladener Wasserdampf. Dieser wird vorzugsweise in den Reaktor der Epichlorhydrinsynthese zurückgeführt.

Das nachfolgende Beispiel soll die Erfindung erläutern jedoch nicht einschränken.

### Beispiel

Abwasser aus der Epichlorhydrinproduktion mit einem AOX-Wert von ca. 40 mg/l, einem CSB-Wert ca. 1000 mg/l und einem pH-Wert von 12 (gemessen bei Raumtemperatur) wurde
a) in einem Reaktor 6 Stunden lang bei einer Temperatur von 100 °C und einem Druck von 1,45 bar (absolut) der erfindungsgemäßen thermisch-alkalischen Behandlung unterworfen und anschließend mit Salzsäure auf einen pH-Wert von 10,5 (gemessen bei Raumtemperatur) eingestellt, gekühlt und anschließend
b) der erfindungsmäßigen aeroben biologischen Behandlung in einem Belebtschlammbecken in Gegenwart von grampositiven Mikroorganismen des Typs Clavibacter insidiosus/sepedonicum und Aureobacterium barkeri mit einem Anteil von 50 % an der gesamten Biozönose und gramnegativen Mikroorganismen des Typs Alcaligenes xylosoxidans subspec. denitrificans mit einem Anteil von 50 % an der gesamten Biozönose bei einer Temperatur von 26 °C und einer mittlere Verweilzeit von 7 Stunden, unterworfen und anschließend
c) in einem Reaktor bei einer mittleren Verweilzeit von 15 Minuten mit 2 g Ozon pro g CSB behandelt und anschließend einer Filtration zur Entfernung von restlichen Feststoffen unterzogen. Durch diese Maßnahmen konnte der AOX-Wert des Abwassers um mehr als 90 % und der CSB-Wert des Abwassers um mehr als 90 % vermindert werden.

## Patentansprüche

1. Verfahren zur Behandlung von organische und anorganische Verbindungen enthaltenden Abwässern der Epichlorhydrinsynthese, dadurch gekennzeichnet, daß das Abwasser das adsorbierbare organische Halogenverbindungen (AOX) in einer Menge von mehr als 10 mg pro Liter und ein Gesamtgehalt von mehr als 0,10 g pro Liter an gelösten organischen Stoffen enthält und einen pH-Wert von 10 bis 14 (gemessen bei Raumtemperatur) aufweist oder auf einen solchen pH-Wert eingestellt wird,
a) in mindestens einen Reaktor eingebracht wird, wobei eine Temperatur von mehr als 75 °C, ein Druck von mindestens 1 bar (absolut) und eine Verweilzeit von mindestens 0,5 Stunden in dem Reaktor eingestellt oder eingehalten werden, das so behandelte Abwasser aus dem Reaktor ausgetragen wird und das Abwasser anschließend auf einen pH-Wert von 7 bis 11 (gemessen bei Raumtemperatur) eingestellt und auf eine Temperatur von kleiner gleich 35 °C abgekühlt wird und danach
b) eine biochemische bzw. biologische Behandlung unter Verwendung von grampositiven und/oder gramnegativen Bakterien bei einer mittleren Verweilzeit von 4 bis 25 Stunden und einer Temperatur von kleiner gleich 35 °C durchläuft, aus der biologischen Behandlungsstufe ausgetragen wird und anschließend
c) einer chemisch-oxidativen Behandlung unterzogen wird.

2. Verfahren nach Anspruch 1, dadurch gekennzeichnet, daß der Verfahrensschritt a) vorzugsweise bei einem pH-Wert von 11 bis 14 (gemessen bei Raumtemperatur), einer Temperatur von 85 bis 185 °C, einem Druck von 1,0 bis 10,5 bar (absolut) und einer Verweilzeit von 1 bis 8 Stunden durchgeführt wird.

3. Verfahren nach Anspruch 1, dadurch gekennzeichnet, daß im Verfahrensschritt b) grampositive Bakterien mit einem Anteil von 20 bis 98 % an der gesamten Biozönose und gramnegative Bakterien mit einem Anteil von 2 bis 80 % an der gesamten Biozönose eingesetzt werden.

4. Verfahren nach Anspruch 1, dadurch gekennzeichnet, daß in der Verfahrensstufe b) nur grampositive Bakterien, vorzugsweise des Typs
Clavibacter
Cellulomonas
Aureobacterium
Microbacterium
Curtobacterium
eingesetzt werden.

5. Verfahren nach Anspruch 1 und 3, dadurch gekennzeichnet, daß grampositive Bakterien vorzugsweise des Typs
Clavibacter
Cellulomonas
Aureobacterium
Microbacterium
Curtobacterium
und gramnegative Bakterien vorzugsweise des Typs Alcaligenes eingesetzt werden.

6. Verfahren nach Anspruch 1, dadurch gekennzeichnet, daß in der Verfahrensstufe b) das Abwasser mit einer mittleren Verweilzeit von 7 bis 18 Stunden behandelt wird.

7. Verfahren nach Anspruch 1, dadurch gekennzeichnet, daß das die Verfahrensstufe a) verlassende Abwasser vor Einleitung in Verfahrensstufe b) mit anderen Abwässern ähnlicher Produktionsverfahren und/oder ähnlicher Inhaltsstoffe und/-oder Abwässern aus der Polyolproduktion und/oder der Vinylchloridproduktion und/oder der Polyvinylchloridproduktion vermischt wird.

8. Verfahren nach Anspruch 7, dadurch gekennzeichnet, daß im Verfahrensschritt b) grampositive Bakterien mit einem Anteil von 5 bis 90 % an der gesamten Biozönose und gramnegative Bakterien mit einem Anteil von 10 bis 95 % an der gesamten Biozönose eingesetzt werden.

9. Verfahren nach Anspruch 8, dadurch gekennzeichnet, daß grampositive Bakterien vorzugsweise des Typs Cellulomonas und gramnegative Bakterien vorzugsweise des Typs
Pseudomonas
Alcaligenes
eingesetzt werden.

10. Verfahren nach Anspruch 1, dadurch gekennzeichnet, daß zur chemisch-oxidativen Behandlung das Abwasser bei einem pH-Wert größer gleich 10, vorzugsweise 10,5, einem ozonhaltigen Gas, mit 1 bis 4 g Ozon pro Gramm Chemischer Sauerstoffbedarf (CSB) bei einer mittleren Verweilzeit von 5 bis 60 Minuten und einer Temperatur von kleiner gleich 35°C behandelt wird oder bei einem vorhandenen oder eingestellten pH-Wert von 6 bis 8 (gemessen bei Raumtemperatur) mit einem Gemisch aus H₂O₂ und Ozon, wobei das Massenverhältnis von H₂O₂ zu Ozon 0,3 bis 0,7 g H₂O₂ pro Gramm Ozon beträgt, bei einer mittleren Verweilzeit von 5 bis 60 Minuten und einer Temperatur von kleiner gleich 35°C, mit 1 bis 4 g Ozon pro Gramm CSB behandelt wird.

11. Verfahren nach Anspruch 1, dadurch gekennzeichnet, daß das Abwasser in der Verfahrensstufe c) mit mehr als 1,5 g Ozon pro Gramm CSB aber weniger als 2,5 g Ozon pro Gramm CSB behandelt wird.

12. Verfahren nach Anspruch 1, dadurch gekennzeichnet, daß das Abwasser nach Verlassen der Verfahrensstufe b) einen pH-Wert von 6,5 bis 7,5 (gemessen bei Raumtemperatur) aufweist oder auf diesen eingestellt wird und in der Verfahrensstufe c) mit einem Gemisch aus 0,5 g H₂O₂ pro Gramm Ozon und mit mehr als 1,5 g Ozon pro Gramm CSB, aber weniger als 2,5 g Ozon pro Gramm CSB behandelt wird.

13. Verfahren nach Anspruch 1, dadurch gekennzeichnet, daß das Abwasser vor, während und/oder nach den einzelnen Behandlungsstufen von suspendierten Feststoffen, vorzugsweise durch chemische Reaktion und/oder mechanische Trennverfahren, zumindest teilweise befreit wird.

## Claims

1. A process for treating waste water, containing organic and inorganic compounds, from the synthesis of epichlorohydrins, characterised in that the waste water, which contains adsorbable organic halogen compounds (AOX) in a quantity of more than 10 mg per litre and a total content of more than 0.10 g per litre of dissolved organic substances, and has a pH value of 10 to 14 (measured at room temperature) or is set to such a pH value,
a) is introduced into at least one reactor, with a temperature of more than 75°C, a pressure of at least 1 bar (absolute) and a dwell time of at least 0.5 hours in the reactor being set or maintained, the waste water thus treated is discharged from the reactor and the waste water is then set to a pH value of 7 to 11 (measured at room temperature) and is cooled to a temperature of equal to or less than 35°C and thereafter
b) undergoes a biochemical or biological treatment using Gram-positive and/or Gram-negative bacteria at an average dwell time of 4 to 25 hours and a temperature of equal to or less than 35°C, is discharged from the biological treatment stage and then
c) is subjected to chemical-oxidative treatment.

2. A process according to Claim 1, characterised in that process stage a) is preferably carried out at a pH value of 11 to 14 (measured at room temperature), a temperature of 85 to 185°C, a pressure of 1.0 to 10.5 bar (absolute) and a dwell time of 1 to 8 hours.

3. A process according to Claim 1, characterised in that Gram-positive bacteria having a content of 20 to 98% of the total biocoenosis and Gram-negative bacteria having a content of 2 to 80% of the total biocoenosis are used in process stage b).

4. A process according to Claim 1, characterised in that only Gram-positive bacteria, preferably of the type
Clavibacter
Cellulomonas
Aureobacterium
Microbacterium
Curtobacterium,
are used in process stage b).

5. A process according to Claims 1 and 3, characterised in that Gram-positive bacteria, preferably of the type
Clavibacter
Cellulomonas
Aureobacterium
Microbacterium
Curtobacterium,
and Gram-negative bacteria, preferably of the type Alcaligenes, are used.

6. A process according to Claim 1, characterised in that in process stage b) the waste water is treated with an average dwell time of 7 to 18 hours.

7. A process according to Claim 1, characterised in that the waste water leaving process stage a), before introduction into process stage b), is mixed with other waste waters from similar production processes and/or of similar contents and/or waste waters from polyol production and/or vinyl chloride production and/or polyvinyl chloride production.

8. A process according to Claim 7, characterised in that Gram-positive bacteria having a content of 5 to 90% of the total biocoenosis and Gram-negative bacteria having a content of 10 to 95% of the total biocoenosis are used in process stage b).

9. A process according to Claim 8, characterised in that Gram-positive bacteria, preferably of the type Cellulomonas, and Gram-negative bacteria, preferably of the type
Pseudomonas
Alcaligenes,
are used.

10. A process according to Claim 1, characterised in that for the chemical-oxidative treatment the waste water is treated at a pH value of equal to or greater than 10, preferably 10.5, with 1 to 4 g ozone per gramme chemical oxygen demand (COD) at an average dwell time of 5 to 60 minutes and a temperature of less than or equal to 35°C or at an existing or set pH value of 6 to 8 (measured at room temperature) is treated with a mixture of H₂O₂ and ozone, the mass ratio of H₂O₂ to ozone being 0.3 to 0.7 g H₂O₂ per gramme ozone, for an average dwell time of 5 to 60 minutes and a temperature of less than or equal to 35°C, with 1 to 4 g ozone per gramme COD.

11. A method according to Claim 1, characterised in that the waste water in process stage c) is treated with more than 1.5 g ozone per gramme COD, but less than 2.5 g ozone per gramme COD.

12. A process according to Claim 1, characterised in that the waste water, after leaving process stage b), has a pH value of 6.5 to 7.5 (measured at room temperature) or is set thereto, and is treated in process stage c) with a mixture of 0.5 g H₂O₂ per gramme ozone and with more than 1.5 g ozone per gramme COD, but less than 2.5 g ozone per gramme COD.

13. A process according to Claim 1, characterised in that the waste water is at least partly freed of suspended solids, preferably by chemical reaction and/or mechanical separation processes, before, during and/or after the individual treatment stages.

## Revendications

1. Procédé de traitement d'eaux résiduaires contenant des composés organiques et minéraux et provenant de la synthèse de l'épichlorhydrine, caractérisé en ce que l'eau résiduaire, qui contient des composés halogénés organiques adsorbables (AOX) en quantité de plus de 10 mg par litre et une teneur totale de plus de 0,10 g par litre en substances organiques dissoutes et présente une valeur de pH de 10 à 14 (mesurée à température ambiante) ou est réglée à une telle valeur de pH,
(a) est injectée dans au moins un réacteur dans lequel une température de plus de 75°C, une pression (absolue) d'au moins 1 bar et un temps de séjour d'au moins 0,5 h sont réglés ou maintenus, l'eau résiduaire ainsi traitée est évacuée du réacteur et l'eau résiduaire est ensuite réglée à une valeur du pH de 7 à 11 (mesurée à température ambiante) et refroidie à une température inférieure ou égale à 35°C, puis
b) est soumise à un traitement biochimique ou biologique par utilisation de bactéries Gram-positives et/ou de bactéries Gram-négatives pendant un temps de séjour moyen de 4 à 25 h et à une température inférieure ou égale à 35°C, et est évacuée de l'étape de traitement biologique et ensuite
c) est soumise à un traitement chimique oxydant.

2. Procédé selon la revendication 1,
caractérisé en ce que l'étape a) du procédé est réalisée de préférence à une valeur du pH de 12 à 14 (mesurée à température ambiante), à une température de 85°C à 185°C, à une pression (absolue) de 1,0 à 10,5 bars et pendant un temps de séjour de 1 à 8 h.

3. Procédé selon la revendication 1,
caractérisé en ce qu'on utilise dans l'étape (b) du procédé des bactéries Gram-positives avec une fraction de 20 à 98 % en biocénose totale et des bactéries Gram-négatives avec une fraction de 2 % à 80 % en biocénose totale.

4. Procédé selon la revendication 1,
caractérisé en ce qu'on utilise dans l'étape b) du procédé uniquement des bactéries Gram-positives, de préférence des germes suivants :
Clavibacter
Cellulomonas
Aureobacterium
Microbacterium
Curtobacterium.

5. Procédé selon les revendications 1 et 3, caractérisé en ce qu'on utilise des bactéries Gram-positives, de préférence des germes suivants :
Clavibacter
Cellulomonas
Aureobacterium
Microbacterium
Curtobacterium
et des bactéries Gram-négatives, de préférence du genre Alcaligenes.

6. Procédé selon la revendication 1,
caractérisé en ce que, dans l'étape b) du procédé, l'eau résiduaire est traitée pendant un temps de séjour moyen de 7 à 18 h.

7. Procédé selon la revendication 1,
caractérisé en ce que l'eau résiduaire quittant l'étape a) du procédé est mélangée, avant d'entrer dans l'étape b) du procédé, à d'autres eaux résiduaires provenant de modes de production similaires et/ou contenant des substances similaires, et/ou à des eaux résiduaires provenant de la production de polyols et/ou de la production de chlorure de vinyle et/ou de la production de poly(chlorure de vinyle).

8. Procédé selon la revendication 7,
caractérisé en ce qu'on utilise dans l'étape (b) du procédé des bactéries Gram-positives avec une fraction de 5 % à 90 % en biocénose totale et des bactéries Gram-négatives avec une fraction de 10 % à 95 % en biocénose totale.

9. Procédé selon la revendication 8,
caractérisé en ce qu'on utilise des bactéries Gram-positives, de préférence du genre Cellulomonas, et des bactéries Gram-négatives, de préférence des genres suivants :
Pseudomonas
Alcaligenes.

10. Procédé selon la revendication 1,
caractérisé en ce que, pour le traitement chimique oxydant, l'eau résiduaire est traitée, à une valeur de pH supérieure ou égale à 10, de préférence de 10,5, par un gaz contenant de l'ozone, avec 1 à 4 g d'ozone par g de demande chimique en oxygène (DCO) pendant un temps de séjour moyen de 5 à 60 min et à une température inférieure ou égale à 35°C, ou à une valeur de pH présente ou réglée de 6 à 8 (mesurée à température ambiante) avec un mélange de H₂O₂ et d'ozone, dont le rapport massique du H₂O₂ à l'ozone est de 0,3 à 0,7 de H₂O₂ par g d'ozone, pendant un temps de séjour moyen de 5 à 60 min et à une température inférieure ou égale à 35°C, avec 1 à 4 g d'ozone par g de DCO.

11. Procédé selon la revendication 1,
caractérisé en ce que l'eau résiduaire est traitée dans l'étape c) du procédé avec plus de 1,5 g d'ozone par g de DCO, mais moins de 2,5 g d'ozone par g de DCO.

12. Procédé selon la revendication 1,
caractérisé en ce que l'eau résiduaire, après avoir quitté l'étape b) du procédé, présente une valeur de pH de 6,5 à 7,5 (mesurée à température ambiante) ou est réglée à cette valeur et est traitée, dans l'étape c) du procédé, avec un mélange de 0,5 g de H₂O₂ par g d'ozone et de plus de 1,5 g d'ozone par g de DCO, mais de moins de 2,5 g d'ozone par g de DCO.

13. Procédé selon la revendication 1,
caractérisé en ce que l'eau résiduaire est au moins partiellement débarrassée, avant, pendant et/ou après les étapes individuelles du procédé, des solides en suspension, de préférence par réaction chimique et/ou par des procédés de séparation mécanique.
